# EUROPEAN PATENT SPECIFICATION

(11) **EP 2 199 054 B1**
(45) Date of publication and mention of the grant of the patent: **22.05.2013**
(21) Application number: 08172326.4
(22) Date of filing: 19.12.2008
(51) Int. Cl.: B29C 45/14, B41M 5/24

(54) **Method of combining laser-engraving and in-mold decoration techniques to laser-engrave pattern on plastic product**
Verfahren zur Kombination von Lasergravur und Folienhinterspritzungstechniken zum Lasergravieren von Kunststoffprodukten
Procédé de combinaison de techniques de gravure au laser et de décoration dans le moule pour graver au laser un produit plastique

(43) Date of publication of application: 23.06.2010
(73) Proprietor: Ju Teng International Holdings Ltd., Hong Kong (CN)
(72) Inventor: Huang, Shao-Liang, 24258, Taipei County (TW); Lo, Yi-Ling, 24258, Taipei County (TW)
(74) Representative: Lang, Christian

(56) References cited:
- EP-A- 0 771 677
- WO-A-02/078927
- JP-A- 7 329 112
- JP-A- 2000 306 453
- US-A1- 2004 125 335

## Description

### FIELD OF THE INVENTION

The present invention relates to a method of combining laser-engraving and in-mold decoration techniques to engrave a pattern on a plastic product and the product thereof. In the method, a print layer is formed and attached to an injection-molded plastic product using in-mold decoration (IMD) technique, and then, a pattern is laser-engraved on the plastic product below the print layer.

### BACKGROUND OF THE INVENTION

Recently, the in-mold decoration (IMD) technique has been widely researched in the injection molding field, and many big-scaled foreign manufacturers have established their own independent department to develop and promote this technique.

With the IMD technique, a pattern to be transferred to an injection-molded plastic product is pre-printed on a transparent transfer-printing film, which can be made of polyethylene (PE), polyethylene terephthalate (PET), polycarbonate (PC), etc. Then, the transfer-printing film is placed between two mold sections of a plastic injection mold, and a plastic material is injected into the mold cavity to produce an injection-molded product. Due to the heat of the plastic material, the pattern pre-printed on the transfer-printing film is transferred to a surface of the injection-molded plastic product.

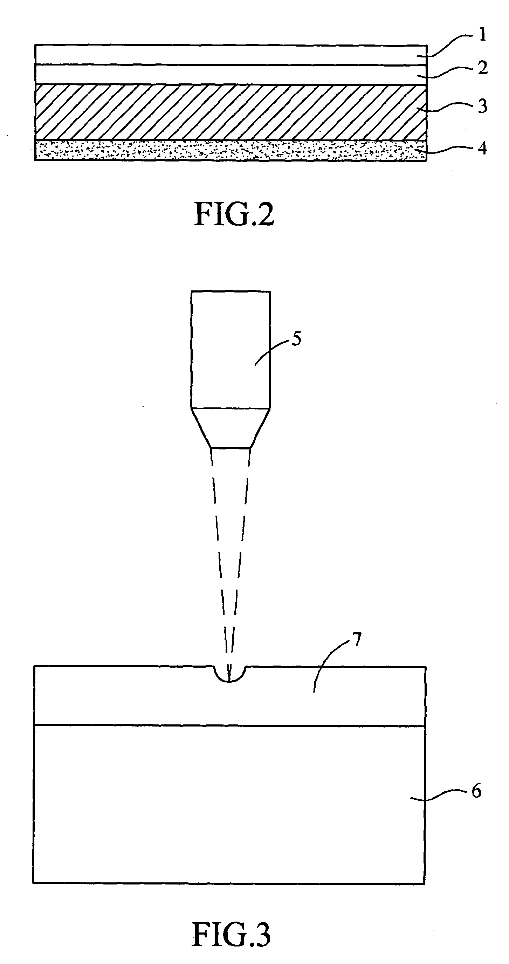

Referring to Fig. 2, the conventional transfer-printing film includes a transparent film 1, a protective layer 2, a print layer 3, and an adhesive layer 4. The transparent film 1 is made of a transparent plastic film material, such as PE, PET, PC, etc. and can be separated from the surface of the injection-molded plastic product after the plastic injection-molding process is completed. The protective layer 2 is provided to a lower side the transparent film 1, and is made of an ultraviolet cured (UV-cured) over-painting varnish material, which is in a soft solid state when being initially painted on the transparent film 1 and can be irradiated with UV light after the transfer-printing process is completed to thereby form a hardened transparent film to protect the print layer 3. The print layer 3 is formed below the protective layer 2 by applying ink, a metallic paint, or other painting material on a lower side of the protective layer 2 through gravure printing or screen printing. After the plastic injection molding process is completed, the print layer 3 forms a surface coating and decorative pattern on the surface of the injection-molded plastic product. The adhesive layer 4 is provided below the print layer 3 for bonding the print layer 3 to the surface of the injection-molded plastic product.

The IMD technique is very new and can be completed through automated production. In comparison with other processes, IMD technique has reduced steps and involves less part assembling and disassembling. Therefore, the IMD technique enables quick production to save time and labor cost. Moreover, the IMD technique enables upgraded product quality, the forming of patterns with increased complexity, and durable product. In addition, the IMD technique is superior to other conventional coatings for inj ection-molded plastic products, such as baking paint and printing, because it is able to create special metallic textures, pearl gloss, and imitation leather textures on the surface of the plastic product, giving the plastic product largely improved feeling of quality.

However, a major disadvantage of the conventional IMD technique is that complicated and specific tools are needed to print the pattern on the transparent transfer-printing film. Moreover, in consideration of the possible stretch and deformation of the transfer-printing film when the same has been placed in the mold cavity, it is necessary to precisely calculate the level of a possible deformation of the transfer-printing film in order to make a proper change in the size of the pattern to be printed thereon. This is why the technique for printing a pattern on the transfer-printing film is highly complex and expensive.

In brief, the conventional IMD technique is expensive in practical application thereof, and has difficulties in producing a relatively sophisticated pattern on the surface of the injection-molded plastic product.

In addition to the IMD technique, there are still many other techniques for producing patterns on injection-molded plastic products. Among others, laser-engraving has also been widely applied in different fields. Fig. 3 shows a conventional laser-engraving process, in which a laser head 5 of a laser-engraving machine projects a laser beam to engrave a pattern on a painting layer 7 coated on a surface of an injection-molded plastic product 6. Alternatively, the laser beam can be directly projected onto the surface of the injection-molded plastic product 6 to engrave a pattern thereon.

The operation of the laser-engraving machine is numerically controlled. The pattern is first converted into digital data and then the laser-engraving machine engraves on the injection-molded plastic product in accordance with the digital data to produce the pattern. In this manner, even a highly complicate pattern can be easily engraved on the injection-molded plastic product, and the laser-engraved pattern can be three-dimensional to give the injection-molded plastic product a highly quality and esthetic appearance.

However, a major disadvantage of the conventional laser-engraving technique is that the laser beam projected from the laser-engraving machine tends to generate a high amount of localized heat when the laser beam engraves on the surface of or the painting layer on the injection-molded plastic product. The material is locally vaporized under the high amount of heat to result in the forming of blisters on the surface of or the painting layer 7 on the injection-molded plastic product 6. Moreover, after being laser-engraved, the surface of the injection-molded plastic product 6 is subject to breaking or cracking due to stress concentration thereat.

According to the aforesaid, the conventional IMD technique and laser-engraving technique require an improvement to enable wider applications thereof.

### SUMMARY OF THE INVENTION

A primary object of the present invention is to provide a method of combining laser-engraving and in-mold decoration techniques to engrave a pattern on a plastic product, so that the advantages of the in-mold decoration technique and the laser-engraving technique are combined to enable easy and convenient creation of a sophisticated pattern on a surface of the injection-molded plastic product.

The invention is defined by the features of claim 1.

To achieve the above and other objects, the method according to a preferred embodiment of the present invention includes the steps of attaching a print layer of a transfer-printing film to a surface of an injection-molded plastic product through the IMD technique; irradiating the transfer-printing film with ultraviolet light to cure a protective layer above the print layer; operating a laser-engraving machine to project a laser beam, so that the laser beam passes through the protective layer and the print layer to focus on and thereby engrave a pattern on the surface of the injection-molded plastic product.

In the method of the present invention, the in-mold decoration technique and the laser-engraving technique are combined, and patterns can be laser-engraved on plastic materials of different colors and natures to create more special changes on the surfaces of the injection-molded plastic products.

With the method of the present invention, the problems of blistered product surface or surface painting material on the injection-molded plastic product as well as broken or cracked product caused by stress concentration during the laser-engraving on the surface of the injection-molded plastic product can be avoided.

The method of the present invention uses laser-engraving technique to produce sophisticated and esthetic patterns on a surface of an injection-molded plastic product that has a transfer-printing film attached thereto through the IMD technique. Therefore, it is not necessary to print any pattern on the transfer-printing film, allowing the convenient forming of a laser-engraved pattern on the injection-molded plastic product at lowered cost.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a schematic view showing a method according to a preferred embodiment of the present invention for laser-engraving a pattern on a surface of an injection-molded plastic product;
Fig. 2 is a schematic view showing the structure of a transfer-printing film used in a conventional in-mold decoration technique; and
Fig. 3 is a schematic view showing the principle of a conventional laser-engraving technique.

### DETAILED DESCRIPTION OF THE PREFERRED EMBODIMENTS

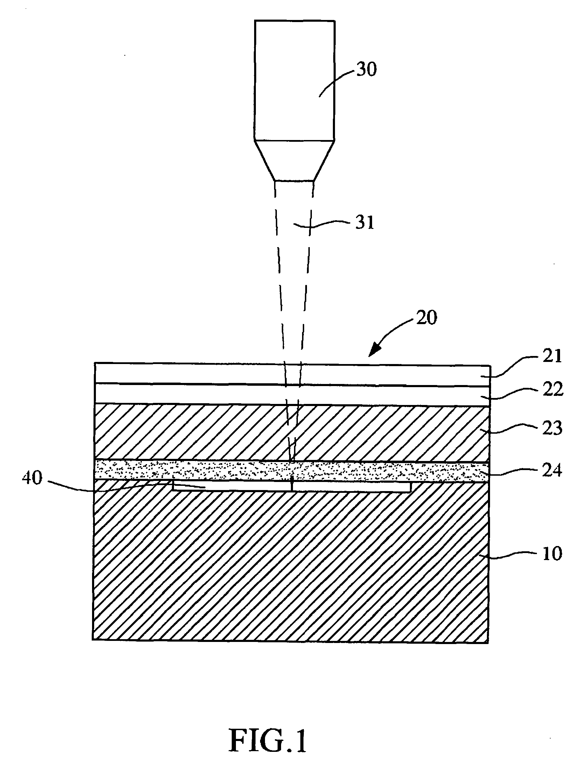

Please refer to Fig. 1, which is a schematic view showing a method according to a preferred embodiment of the present invention for laser-engraving a pattern on an injection-molded plastic product 10. Briefly speaking, in the method of the present invention, a light-transmittable print layer is formed on a surface of the injection-molded plastic product 10 with the IMD technique, and then a pattern is laser-engraved on the surface of the injection-molded plastic product 10. Therefore, the method of the present invention possesses the advantages of the IMD technique and the laser-engraving technique while avoid the drawbacks thereof. More specifically, the method of the present invention includes the following steps:
1. Preparing a transfer-printing film 20:
   The transfer-printing film 20 is to be applied on the injection-molded plastic product 10 through the IMD technique. As shown in Fig. 1, the transfer-printing film 20 used in the present invention includes a transparent film 21, a transparent protective layer 22, a print layer 23, and an adhesive layer 24. The transparent film 21 is made of a transparent polymeric material, such as PE, PC, etc. The transparent protective layer 22 is coated on a lower side of the transparent film 21, and is made of a UV-cured over-painting varnish material. The UV-cured over-painting varnish material is in a fluid state before being irradiated by UV light, so that the initial transfer-printing film 20 is soft and flexible. After being irradiated with UV light, the protective layer 22 will become transparent and hardened. The print layer 23 is formed by applying ink, paint, or other coating materials on a lower side of the protective layer 22, and can be a light-transmittable layer. When having been transfer-printed on a surface of the injection-molded plastic product 10, the print layer 23 provides colors or patterns on the surface of the inj ection-molded plastic product 10. The adhesive layer 24 is applied on a lower side of the print layer 23 for bonding the print layer 23 to the surface of the injection-molded plastic product 10.
2. Performing the in-mold decoration:
   Before injection molding the product 10, the transfer-printing film 20 is conveyed by a thin-film conveyor and placed in a mold cavity of an injection mold. Then, the transfer-printing film 20 is tightly attached to the injection mold in the mold cavity by way of vacuum molding.Thereafter,theplasticinjection moldingstarts. After the plastic injection molding is completed, the transfer-printing film 20 is integrated with the injection-molded plastic product 10. At this point, the protective layer 22, the print layer 23, and the adhesive layer 24 of the transfer-printing film 20 are coated on the surface of the injection-molded plastic product 10.
3. UV-curing the protective layer:
   After the transfer-printing film 20 is coated on the surface of the injection-molded plastic product 10, the transparent film 21 is separated from the injection-molded plastic product 10. At this point, the protective layer 22 is still in a fluid state. Then, the protective layer 22 is irradiated with UV light and cured to form a rigid and wear-proof protective film, which is able to keep the print layer 23 under the protective layer 22 in a stable state and protects the print layer 23 against damage and wearing.
4. Laser-engraving a pattern on the inj ection-molded plastic product:
   After the protective layer 22 is irradiated with UV light and cured, the injection-molded plastic product 10 is laser-engraved to produce a pattern thereon.

As shown in Fig. 1, a laser head 30 of a laser-engraving machine projects a laser beam 31, which passes through the print layer 23 to focus on the surface of the injection-molded plastic product 10, so as to laser-engrave a pattern on the injection-molded plastic product 10

As aforesaid, the protective layer 22 and the print layer 23 each are made of a transparent material. Therefore, the laser beam 31 can pass through the protective layer 22 and the print layer 23 to focus on the injection-molded plastic product 10. Accordingly, the laser beam 31 would only laser-engrave the injection-molded plastic product 10 to produce textures thereon without affecting the protective layer 22 or the print layer 23.

The operation of the laser-engraving machine is numerically controlled. The pattern to be laser-engraved on the injection-molded plastic product 10 is first converted into digital data. Then, the laser-engraving machine controls the laser head 30 to move in a path according to the digital data, so as to laser-engrave the pattern on the injection-molded plastic product 10.

According to the aforesaid, the method of the present invention has the following advantages:

Firstly, the numerically controlled laser-engraving machine engraves the pattern on the surface of the injection-molded plastic product 10 that has been applied with a transfer-printing film 20 through the IMD technique. Unlike the IMD technique that has difficulty in producing a highly complex pattern, the laser-engraving machine has the ability of engraving a highly fine and sophisticated pattern on the surface of the injection-molded plastic product 10. Therefore, with the method of the present invention, it is not necessary to print a pattern on the transfer-printing film 20, and the complicate, troublesome, and expensive tools for printing the pattern on the transfer-printing film 20 can be saved.

Secondly, in the method of the present invention, the advantages of the IMD technique and the laser-engraving technique are combined. Generally, since the pattern produced by laser-engraving is located at a shallow area on the surface of a substrate material, the laser-engraved pattern will vary with the color and nature of the substrate material and the level of energy for laser-engraving. In the method of the present invention, the pattern is laser-engraved on the surface of the injection-molded plastic product 10 that has been applied with a transfer-printing film 20 through the IMD technique. Since the IMD technique enables the forming of different and special surface effect, such as high gloss, pearl gloss, etc, the laser-engraved pattern on the surface of the injection-molded plastic product 10 can show various special changes. Moreover, the protective layer 22 provides good protection to the pattern laser-engraved on the injection-molded plastic product 10.

Thirdly, compared to the conventional laser-engraving technique, the method of the present invention allows the laser beam 31 to precisely focus on the surface of the injection-molded plastic product 10 without damaging the protective layer 22 or the print layer 23 below the protective layer 22. Therefore, the problems of blistered product surface and broken or cracked product caused by stress concentration during the laser-engraving as found in the conventional laser-engraving technique can be avoided.

In conclusion, the method of the present invention combines the advantages of the conventional IMD technique and laser-engraving technique to enable convenient creation of a sophisticated and esthetic pattern on the surface of an injection-molded plastic product.

The present invention has been described with a preferred embodiment thereof and it is understood that many changes and modifications in the described embodiment can be carried out without departing from the scope and the invention that is intended to be limited only by the appended claims.

## Claims

1. A method of combining laser-engraving and in-mold decoration (IMD) techniques to engrave a pattern (40) on a plastic product (10), comprising the following steps:
A. Preparing a transfer-printing film (20); the transfer-printing film (20) including a transparent film (21), a layer of UV-cured over-painting varnish material applied on a lower side of the transparent film (21) to form a transparent protective layer (22), and a transparent print layer (23) applied to a lower side of the protective layer (22);
B. Performing the IMD by placing the transfer-printing film (20) in a mold cavity of an injection mold, and injecting a plastic material into the mold cavity to form an injection-molded plastic product (10) with the transfer-printing film (20) being coated on a surface of the injection-molded plastic product (10);
C. UV-curing the protective layer (22) by irradiating UV light on the surface of the injection-molded plastic product (10) having the protective layer (22) coated thereon, so that the protective layer (22) is UV-cured; and
D. Laser-engraving a pattern (40) on the surface of the injection-molded plastic product (10) by operating a laser-engraving machine to project a laser beam (31) on the surface of the injection-molded plastic product (10), so that a pattern (40) is laser-engraved on the surface of the injection-molded plastic product (10).

2. The method as claimed in claim 1, wherein the laser beam (31) projected by the laser-engraving machine passes through the protective layer (22) and the print layer (23) to focus in the injection-molded plastic product (10), so as to laser-engrave the pattern (40) on the surface of the injection-molded plastic product (10).

## Patentansprüche

1. Verfahren zur Kombination von Lasergravur - und Folienhinterspritz (IMD in-mold decoration) -Techniken, um ein Muster (40) auf einem Kunststoffprodukt (10) einzugravieren, das die folgenden Schritte umfasst:
A. Vorbereiten einer Übertragungsdruckfolie (20), wobei die Übertragungsdruckfolie (20) eine transparente Folie (21), eine Schicht aus UV - vernetztem, übermalendem Decklackmaterial, das auf einer unteren Seite der transparenten Folie (21) aufgebracht ist, um eine transparente Schutzschicht (22) auszubilden, und eine transparente Druckschicht (23) umfasst, die auf einer unteren Seite der Schutzschicht (22) aufgebracht ist;
B. Ausführen des IMD, indem die Übertragungsdruckfolie (20) in einen Gießhohlraum einer Spritzgussform angeordnet wird, und Einspritzen eines Kunststoffinaterial in den Gießhohlraum, um ein Spritzgusskunststoffprodukt (10) herzustellen, wobei die Übertragungsdruckfolie (20) auf eine Oberfläche des Spritzgusskunststoffprodukts (10) aufgebracht wird;
C. UV - Aushärten der Schutzschicht (22), indem UV - Licht auf die Oberfläche des Spritzgusskunststoffprodukts (10) gestrahlt wird, auf der die Schutzschicht (22) aufgebracht ist, so dass die Schutzschicht (22) UV - ausgehärtet wird; und
D. Lasergravieren eines Musters (40) auf der Oberfläche des Spritzgusskunststoffprodukts (10), indem eine Lasergravurmaschine betrieben wird, um einen Laserstrahl (31) auf die Oberfläche des Spritzgusskunststoffprodukts (10) zu projizieren, so dass ein Muster (40) auf die Oberfläche des Spritzgusskunststoffprodukts (10) lasergraviert wird.

2. Verfahren nach Anspruch 1, wobei der Laserstrahl (31), der durch die Lasergravurmaschine projiziert wird, durch die Schutzschicht (22) und die Druckschicht (23) hindurch tritt, um an dem Spritzgusskunststoffprodukt (10) fokussiert zu werden, so dass das Muster (40) auf die Oberfläche des Spritzgusskunststoffprodukts (10) lasergraviert wird.

## Revendications

1. Procédé de combinaison de techniques de gravure laser et de décoration IMD ("in-mold decoration") pour graver un motif (40) sur un produit en plastique (10) comprenant les étapes suivantes :
A. Préparation d'un film d'impression par transfert (20), le film d'impression par transfert (20) comprenant un film transparent (21), une couche de matière de vernis repeint séché aux UV appliqué sur un côté inférieur du film transparent (21) pour former une couche protectrice transparente (22) et une couche d'impression transparente (23) appliquée sur un côté inférieur de la couche protectrice (22) ;
B. Réalisation de l'IMD en plaçant le film d'impression par transfert (20) dans une cavité de moule d'un moule d'injection et injection d'une matière plastique dans la cavité du moule pour former un produit en plastique moulé par injection (10) avec le film d'impression par transfert (20) qui est revêtu sur une surface du produit en plastique moulé par injection (10) ;
C. Séchage aux UV de la couche de protection (22) en irradiant de la lumière UV sur la surface du produit en plastique moulé par injection (10) ayant la couche protectrice (22) revétue dessus si bien que la couche protectrice (22) est séchée aux UV et
D. Gravure laser d'un motif (40) sur la surface du produit en plastique moulé par injection (10) en faisant fonctionner une machine de gravure laser pour projeter un faisceau laser (31) sur la surface du produit en plastique moulé par injection (10) si bien qu'un motif (40) est gravé par laser sur la surface du produit en plastique moulé par injection (10).

2. Procédé selon la revendication 1 dans lequel le faisceau laser (31) projeté par la machine de gravure laser passe à travers la couche protectrice (22) et la couche d'impression (23) pour se concentrer dans le produit en plastique moulé par injection (10) de manière à graver par laser le motif (40) sur la surface du produit en plastique moulé par injection (10).
